Europäisches Patentamt

European Patent Office

Office européen des brevets

(11) Publication number: **0 174 599**
**A2**

# (12) EUROPEAN PATENT APPLICATION

(21) Application number: **85111151.8**

(22) Date of filing: **04.09.85**

(51) Int. Cl.⁴: **C 04 B 2/02**

(30) Priority: **06.09.84 SE 8404476**

(43) Date of publication of application:
**19.03.86 Bulletin 86/12**

(84) Designated Contracting States:
**AT BE CH DE FR GB IT LI NL SE**

(71) Applicant: **Perstorp AB**
**Box 5000**
**S-284 00 Perstorp(SE)**

(72) Inventor: **Johansson, Lennart Karl Ragnar**
**Fagelhultsvägen 27**
**S-222 53 Lund(SE)**

(74) Representative: **Frankland, Nigel Howard et al,**
**FORRESTER & BOEHMERT Widenmayerstrasse 4/I**
**D-8000 München 22(DE)**

(54) **Quick lime.**

(57) Quick lime with prolonged hydration time, which lime has been treated at a raised temperature with at least one compound selected from the group consisting of monocarboxylic acid, dicarboxylic acid or polycarboxylic acid, a salt of anyone of these acids or a salt of oxophosphoric acid, a process for the production of said product and the use thereof.

Quick Lime

THE PRESENT INVENTION relates to quick lime, and more particularly relates to quick lime having a relatively long hydration time, a process for the production of quick lime of this type (herein called "retarded lime") and the use thereof.

A few different methods for prolonging the hydration time of quick lime have been proposed. According to one such method the quick lime is mixed, for example, with saccharides or borates without any heat treatment. A certain prolongation of the hydration time can be obtained with this method, but the prolongation is not very great. This is especially the case when large amounts of quick lime are treated by the method and subsequently hydrated.

To achieve a better prolongation of the hydration lime, more complicated methods have been used. In one known method the lime is burnt for a long time at an extremely high temperature, $1400-1800^{\circ}C$. Then a very inactive, so-called "dead-burnt", lime is obtained.

In another known method the lime is also burnt at a temperature of $1400-1800^{\circ}C$. However, in this method the burning takes place in the presence of a compound such as $SiO_2$ or gypsum. These compounds protect the lime or form a complex with it. Thus, for a certain time, the water is prevented from coming into contact with the lime particles.

One drawback of the two last mentioned methods is the high burning temperatures needed for the lime. It is, of course, expensive to produce these high temperatures. Moreover, only very narrow intervals for particle size and crystal size can be used.

According to one aspect of this invention there is provided quick lime which has been treated at an elevated temperature wherein the quick lime is treated at that elevated temperature in the presence of at least one compound selected from the group consisting of monocarboxylic acid, dicarboxylic acid and polycarboxylic acid, a salt of any one of these acids or a salt of an oxophosphoric acid in such a way that a chemical reaction occurs between the lime and the acid or salt used, the quick lime having a relatively long hydration time.

According to another aspect of the invention there is provided a process for the production of quick lime with a relatively long hydration time wherein the process comprises mixing quick lime with at least one compound selected from the group consisting of monocarboxylic acid, dicarboxylic acid and polycarboxylic acid, a salt of any one of these acids or a salt of an oxophosphoric acid and keeping the mixture obtained for 1 to 36 hours at an elevated temperature of 50 to 450°C.

Preferably the mixture is stirred whilst it is retained at said elevated temperature.

Conveniently the mixture is retained at said elevated temperature for 1 to 10 hours.

Advantageously said elevated temperature is between 90 and 300°C.

In order to achieve the desired effect the added compound or compounds should advantageously be about 0.4 - 15, preferably 0.4 -10 percent by weight of the lime. The precise quantity of added compound or compounds used depends on the particular acid or salt used and the degree of retardation of the lime that is required.

One especially preferable embodiment of the invention is obtained if the quick lime is mixed with oxalic acid. Then preferably 0.4 -6 percent by weight oxalic acid is added to the lime.

In preferred embodiments the added compound or compounds are present as a powder. However, in principle also compounds in liquid form can be used.

The quick lime is used as the starting material for a process according to the present invention suitably consists of so-called normally burnt lime which has been burnt at a temperature of about 900-1350°C. Of course, it is a great advantage that such an easily available raw material can be used instead of highly burnt lime which has been used in previously known processes.

After cooling, the quick lime with prolonged hydration time produced according to the invention can be mixed with 0.1 - 5 percent by weight of a water reducing agent. The water reducing agent may be sulphonated melamine-formaldehyde resin, lignosulphonate, $Na_2SO_4$ or naphthalene-form-aldehyde resin. In this way the hydration time can be further increased. Of course, other water reducing agents can be used.

The term "water reducing agent" is used in this specification to mean an agent which can be added to mortar or a mortar-like mixture increase the flowability of the mortar. Thus, by using such an agent it is possible to make a mortar with good flow properties, but only a small quantity of water. Such agents are readily available for use, for example when laying cement floors. It is believed that such materials are anion active and thus provide a dispersing effect.

The quick lime with prolonged hydration time produced by a preferred process according to the invention may be primarily intended to be used as an active component in a static demolition agent. Such an agent consists of a composition which swells and generates an expansive pressure after being mixed with water. The expansive pressure is then generated wholly or partly by the hydration of the quick lime (calcium oxide) to calcium hydroxide.

Static demolition agents are preferably used for cracking and dividing brittle materials such as stone, concrete and the like. Usually holes are drilled into the stone or the like, and the demolition agent is introduced to the hole. The demolition agent then swells and cracks the stone.

A suitable static demolition agent can for instance contain 40-95 per cent by weight of a quick lime with prolonged hydration time produced by a process according to the invention and 5-40 percent by weight of $SiO_2$. Usually the particle size of the lime is 0 - 1.0 mm, preferably 0 - 0.5 mm.

Instead of $SiO_2$ one or more other pozzolanic materials can be used. Furthermore, the static demolition agent can contain a hydraulic binder such as cement. Portland cement is an example of a suitable cement.

The purposes of the pozzolanic material and/or the hydraulic binder in the demolition agent is to prevent the demolition agent from spurting up from the holes that are drilled in a stone or the like to receive the demolition agent.

When the demolition agent is used it is usually mixed with 25-40 per cent by weight of water to form a manageable mass which is then poured into these holes. The stone is then, after a time, cracked by the expansive force. The time can vary between some hours up to a couple of days depending, for instance, on the hydration time of the retarded lime, the material to be cracked, the temperature of the surroundings and the diameter of the holes.

The invention will be further explained in connection with the examples given below of which Examples 1-15 illustrate the production of quick lime with a prolonged hydration time according to the invention. Examples 16-18, 37-39 and 46-48 relate to comparison tests outside the scope of the present invention. Examples 19-36 relate to embodiments according to the invention where the hydration time has been further prolonged by admixture of a water reducing agent. Finally Examples 40-45 illustrate the use of the retarded lime produced according to the invention as a component in a static demolition agent.

Example 1

1000 g of ordinary commercial burnt lime (burnt for 4 hours at $1250^{o}$ C) with a particle size of 0 -0.2 mm was mixed with 0.4 percent by weight of oxalic acid ($C_2O_4H_2 . 2H_2O$). The mixture obtained was transferred to a metal tin provided with an aluminium lid. The lid was intended to prevent air and water from coming into contact with the mixture. The tin was placed in an oven for 3 hours. The oven had a temperature of $160^{\circ}$C. Thereafter, the mixture in the tin was allowed to cool to room temperature.

To measure the hydration velocity of the product obtained (the retarded lime) 150.6 g thereof was poured into 600.0 g water in a vacuum flask having a height of 175 mm and an inner diameter of 85 mm. The vacuum flask had a tight fitting lid provided with holes in the lid for a thermometer and a stirrer. The holes were sealed around the thermometer and the stirrer. A two-bladed propeller with a width of 60 mm was used for stirring and it was placed 20 mm from the bottom of the vacuum flask. The stirring velocity was 800 revolutions minute.

The time lapsed from the pouring of the mixture into the vacuum flask until the temperature of the mixture in the vessel had increased from $+19^{\circ}$ C to $+50^{\circ}$ C was registered. This time is used below as a measure of the hydration time. In the present test it was 4.0 minutes.

Example 2

The process according to Example 1 was repeated with the difference that the temperature in the oven was $285^{\circ}$ C instead of $160^{\circ}$ C. The measured hydration time was 6.5 minutes.

Example 3

The process according to Example 1 was repeated with the difference that 1.1 per cent by weight of oxalic acid ($C_2O_4H_2 . 2J_2o$) was used instead of 0.4 per cent by weight. Moreoever, for the hydration velocity test 151.7 g of the mixture was poured into the water instead of 150.6 g. The hydration time was 4.5 minutes.

Example 4

The process according to Example 3 was repeated with the exception that the temperature in the oven was $240^{\circ}$C instead of $160^{\circ}$C. The hydration time was 5.5 minutes.

### Example 5

The process according to Example I was repeated with the differences that 2.0 percent by weight of oxalic acid ($C_2O_4H_2 \cdot 2H_2O$) was used, and the tin was heated in the oven for 2 hours and that 153.0 g retarded lime was poured into the water. The hydration time was 7.0 minutes.

### Example 6

The process according to Example 5 was repeated with the differences that the heat treatment in the oven was carried out at $100^{\circ}C$ for 4 hours. The hydration time was 6.0 minutes.

### Example 7

The process according to Example I was repeated with the difference that 10.0 percent by weight of oxalic acid ($C_2O_4H_2 \cdot 2H_2O$) was used, that the heating in the oven was carried out for 6.0 hours at $240^{\circ}C$ and that 165.0 g retarded lime was poured into the water. The hydration time was 70.0 minutes.

### Example 8

The process according to Example I was repeated with the differences that 5.0 percent by weight of water-free oxalic acid was used, that the heating was carried out at $240^{\circ}C$ and that 175.5 g retarded lime was poured into the water. The hydration time was 17.0 minutes.

### Example 9

The process according to Example I was repeated with the differences that 1.5 percent by weight of lauric acid was used instead of the caboxylic acid, that the heating was carried out at $185^{\circ}C$ and that 152.3 g retarded lime was poured into the water. The hydration time was 29.0 minutes.

## Example 10

The process according to Example 1 was repeated with the differences that 1.5 percent by weight of malonic acid was used instead of the carboxylic acid that the heating was carried out at 240°C and that 152.3 g retarded lime was poured into the water. The hydration time was 44.0 minutes.

## Example 11

The process according to Example 1 was repeated with the difference that 1.0 per cent by weight of tartaric acid was used instead of the carboxylic acid, that the heating was carried out at 240°C and that 151.5 g retarded lime was poured into the water. The hydration time was 409 minutes.

## Example 12

The process according to Example 1 was repeated with the differences that 1.0 percent by weight of $Na_2HPO_4 . 12 H_2O$ was used instead of the carboxylic acid, that the heating was carried out at 240°C and that 151.5 g retarded lime was poured into the water. The hydration time was 8.0 minutes.

## Example 13

The process according to Example 1 was repeated with the differences that 2.00 percent by weight of $NaH_2PO_4 . 2 H_2O$ was used instead of the carboxylic acid, that the heating was carried out at 240°C and that 153.0 g retarded lime was poured into the water. The hydration time was 4.5 minutes.

## Example 14

The process according to Example 1 was repeated with the differences that 5.0 percent by weight of $CaC_2O_4 . H_2O$ was used instead of the carboxylic acid, that the heating was carried out at 270°C and that 157.5 g retarded lime was poured into the water. The hydration time was 5.5 minutes.

## Example 15

The process according to Example I was repeated with the differences that 1.0 percent by weight of citric acid was used instead of the carboxylic acid that the heating was carried out at 230°C and that 151.5 g retarded lime was poured into the water. The hydration time was 400 minutes.

## Example 16

The process according to Example I was repeated with the differences that 150.0 g quick lime was used, that the lime was not mixed with any other compound and that no heating in an oven took place. The hydration time was 2.5 minutes.

## Example 17

The process according to Example I was repeated with the differences that the quick lime was not mixed with any other compound, that the heating was carried out for 3.5 hours and that 150.0 g of the heat treated lime was poured into the water. The hydration time was 3.0 minutes.

## Example 18

The process according to Example I was repeated with the differences that the lime was mixed with 2.0 per cent by weight of oxalic acid $(C_2O_4H_2 . 2H_2O)$, that no heating in an oven took place and that 153.0 g of the mixture obtained was poured into the water. The hydration time was 3.0 minutes.

## Example 19

150.6 g of the retarded lime produced according to Example I was mixed with 2.3 g water reducing agent consisting of pulverulent sulphonated melamine-formaldehyde resin (as sold under the designation Permain F$^P$, by Perstorp AB, Perstorp, Sweden).

The hydration time of the mixture obtained was measured in the same way as according to Example I and was 14.0 minutes.

Example 20

The process according to Example 19 was repeated with the difference that 150.6 g of the retarded lime produced according to Example 2 was mixed with the water reducing agent. The hydration time was 56.0 minutes.

Example 21

The process according to Example 19 was repeated with the difference that 151.7 g of the retarded lime produced according to Example 3 was mixed with the water reducing agent. The hydration time was 17.0 minutes.

Example 22

The process according to Example 19 was repeated with the difference that 151.7 g of the retarded lime produced according to Example 4 was mixed with the water reducing agent. The hydration time was 31.0 minutes.

Example 23

The process according to Example 19 was repeated with the difference that 153.0 g of the retarded lime produced according to Example 5 was mixed with water reducing agent. The hydration time was 60.0 minutes.

Example 24

The process according to Example 19 was repeated with the difference that 153.0 g of the retarded lime produced according to Example 5 was mixed instead with 2.3 g of another pulverulent water reducing agent consisting of naphthalene-formaldehyde resin (Mighty 100, Kao Soap Ltd., Japan). The hydration time was 13.5 minutes.

Example 25

The process according to Example 19 was repeated with the difference that 153.0 g of the retarded lime produced according to Example 5 was mixed instead with 2.3 g of another pulverulent water reducing agent consisting of lignosulphonate (Wargonin Compact, Holmens Bruk, Vargon, Sweden). The hydration time was 140.0 minutes.

Example 26

The process according to Example 19 was repeated with the difference that 153.0 g of the retarded lime produced according to Example 5 was mixed instead with 2.3 g of another pulverulent water reducing agent consisting of $Na_2SO_4$. The hydration time was 29.0 minutes.

Example 27

The process according to Example 19 was repeated with the difference that 153.0 g of the retarded lime produced according to Example 6 was mixed with the water reducing agent. The hydration time was 21.0 minutes.

Example 28

The process according to Example 19 was repeated with the difference that 165.0 g of the retarded lime produced according to Example 7 was mixed with the water reducing agent. The hydration time was 250.0 minutes.

Example 29

The process according to Example 19 was repeated with the difference that 157.5 g of the retarded lime produced according to Example 8 was mixed with the water reducing agent. The hydration time was 100.0 minutes.

## Example 30

The process according to Example 19 was repeated with the difference that 152.3 g of the retarded lime produced according to Example 9 was mixed with the water reducing agent. The hydration time was 47.0 minutes.

## Example 31

The process according to Example 19 was repeated with the difference that 152.3 g of the retarded lime produced according to Example 10 was mixed with the water reducing agent. The hydration time was 100.0 minutes.

## Example 32

The process according to Example 19 was repeated with the difference that 151.5 g of the retarded lime produced according to Example 11 was mixed with the water reducing agent. The hydration time was 570.0 minutes.

## Example 33

The process according to Example 19 was repeated with the difference that 151.5 g of the retarded lime produced according to Example 12 was mixed with the water reducing agent. The hydration time was 44.0 minutes.

## Example 34

The process according to Example 19 was repeated with the difference that 153.0 g of the retarded lime produced according to Example 13 was mixed with the water reducing agent. The hydration time was 35.0 minutes.

## Example 35

The process according to Example 19 was repeated with the difference that 157.5 g of the retarded lime produced according to Example 14 was mixed with the water reducing agent. The hydration time was 67.0 minutes.

## Example 36

The process according to Example 19 was repeated with the difference that 151.5 g of the retarded lime produced according to Example 15 was mixed with the water reducing agent. The hydration time was 8 hours.

## Example 37

The process according to Example 19 was repeated with the difference that 150.0 g of the lime disclosed in Example 16 was mixed with the water reducing agent. The hydration time was 7.5 minutes.

## Example 38

The process according to Example 19 was repeated with the difference that 150.0 g of the heat treated quick lime produced according to Example 17 was mixed with the water reducing agent. The hydration time was 9.5 minutes.

The process according to Example 19 was repeated with the difference that 153.0 g of the mixture of oxalic acid $(C_2O_4H_2 \cdot 2H_2O)$ and lime produced according to Example 18 was mixed with the water reducing agent. The hydration time 8.0 minutes.

## Example 40

A static demolition agent was produced by mixing 83.0 per cent by weight of the retarded lime produced according to Example 3, 15.5 per cent by weight of a water reducing agent consisting of pulverulent sulphonated melamine-formaldehyde resin (Peramin F$^P$).

30 percent by weight of water calculated on the above mixture was admixed with the mixture. The water had a temperature of $+17^{\circ}C$.

The demolition effect was measured on a specimen of concrete (compression strength 40 M Pa). The specimen had the shape of a truncated cone with a lower outside diameter of 285 mm, an upper outside diameter of 225 mm and a height of 260 mm. In the centre of the cone there was a hole having a diameter of 40 mm and a depth of 165 mm.

The above mixture of demolition agent and was poured into the hole of the truncated cone, which cone had a temperature of $+17^{\circ}C$. The hole was filled completely. The time that elapsed from pouring the mixture into the hole until the cone completely cracked was 2 hours and 50 minutes.

EXAMPLE 41

The process according to Example 40 was repeated with the difference that the static demolition agent was produced by mixing 83.0 per cent by weight of the retarded lime produced according to Example 4, 15.5 percent by weight of $SiO_2$ and 1.5 percent by weight of water reducing agent. The cracking time was 5 hours and 45 minutes.

Example 42

The process according to Example 40 was repeated with the difference that the static demolition agent was produced by mixing 83.0 percent by weight of the retarded lime produced according to Example 5, 15.5 percent by weight of $SiO_2$ and 1.5 percent by weight of water reducing agent. The cracking time was 4 hours and 40 minutes.

Example 43

The process according to Example 40 was repeated with the difference that the static demolition agent was produced by mixing 83.0 percent by weight of the retarded lime produced according to Example 12, 15.5 percent by weight of $SiO_2$ and 1.5 percent by weight of water reducing agent. The cracking time was 7 hours and 25 minutes.

-14-

### Example 44

The process according to Example 1 was repeated with the differences that 0.7 percent by weight of tartaric acid was used and that the heating was carried out for 3 hours at 240°C. The hydration time was not measured.

A static demolition agent was produced by mixing 83.0 percent by weight of the retarded lime produced in this way, 15.5 percent by weight of $SiO_2$ and 1.5 percent by weight of a water reducing agent in pulverulent form (Peramin $F^P$).

Then the process according to Example 40 was repeated. The cracking time was 8 hours and 30 minutes.

### Example 45

The process according to Example 8 was repeated with the difference that 2.0 percent by weight of water free oxalic acid was used and the heating was carried out for 4 hours. The hydration time was not measured.

A static demolition agent was produced by mixing 83.0 percent by weight of the retarded lime produced above, 15.5 percent by weight of $SiO_2$ and 1.5 percent by weight of a water reducing agent in pulverulent form (Peramin $F^P$).

Then the process according to Example 40 was repeated. The cracking time was 10 hours and 15 minutes.

### Example 46

The process according to Example 40 was repeated with the difference that the static demolition agent was produced by mixing 83.0 percent by weight of the lime from Example 16, 15.5 percent by weight of $SiO_2$ and 1.5 percent by weight of a water reducing agent in pulverulent form (Peramin $F^P$).

Then the process according to Example 40 was repeated. No cracking was achieved since the mixture immediately spurted out of the hole in the specimen.

Example 47

The process according to Example 40 was repeated with the difference that the static demolition agent was produced by mixing 83.0 percent by weight of the heat treated lime from Example 17, 15.5 percent by weight of $SiO_2$ and 1.5 percent by weight of a water reducing agent in pulverulent form (Peramin $F^P$).

Then the process according to Example 40 was repeated. No cracking was achieved since the mixture immediately spurted out of the hole in the specimen.

Example 48

The process according to Example 40 was repeated with the difference that the static demolition agent was produced by mixing 83.0 percent by weight of the lime mixed with oxalic acid according to Example 18, 15.5 percent $SiO_2$ and 1.5 percent by weight of a water reducing agent in pulverulent form (Peramin $F^P$).

Then the process according to Example 40 was repeated. No cracking was achieved since the mixture immediately spurted out of the hole in the specimen.

In the above Examples 1-39 all the compositions contain 150.0 g quick lime (CaO). Thereby the different results can be compared in a correct way.

From the Examples it is evident that by using a process according to the invention quick lime with a hydration time extended within wide limits can be produced. The hydration time chosen depends on the field of use of the retarded lime.

The comparison tests show clearly that quick lime which has not been treated, quick lime which has only been heat treated and quick lime which has only been mixed mechanically with any one of the special compounds used in the invention without heat treatment does not work satisfactorily as a static demolition agent.

The present invention is not limited to the embodiments shown, since these can be modified in different ways within the scope of the invention.

CLAIMS:

1.    Quick lime which has been treated at an elevated temperature characterised in that the quick lime is treated at that elevated temperature in the presence of at least one compound selected from the group consisting of monocarboxylic acid, dicarboxylic acid and polycarboxylic acid, a salt of any one of these acids or a salt of an oxophosphoric acid in such a way that a chemical reaction occurs between the lime and the acid or salt used, the quick lime having a relatively long hydration time.

2.    A process for the production of quick lime with a relatively long hydration time, characterised in that the process comprises mixing quick lime with at least one compound selected from the group consisting of monocarboxylic acid, dicarboxylic acid and polycarboxylic acid, a salt of any one of these acids or a salt of an oxophosphoric acid and keeping the mixture obtained for 1 to 36 hours at an elevated temperature of 50 to 450°C.

3.    A process according to claim 2, wherein the mixture is stirred whilst it is retained at said elevated temperature.

4.    A process according to claim 2 or 3, wherein the mixture is retained at said elevated temperature for 1 to 10 hours.

5.    A process according to any one of claims 2 to 4, wherein the added compound or compounds are about 0.4 to 15 percent by weight of the lime.

6.    A process according to claim 5, wherein the added compound or compounds are about 0.4 to 10 percent by weight of the lime.

7.    A process according to any one of claims 2 to 6, wherein the added compound or compounds are present as a powder.

8.    A process according to any one of claims 2 to 7 wherein said elevated temperature is between 90 and 300°C.

9.    A process according to any one of claims 2 to 8, wherein the selected compound is oxalic acid.

10. A process according to any one of claims 2 to 7, which comprises mixing the quick lime with prolonged hydration time obtained, after cooling, with 0.1 - 5 per cent by weight of a water reducing agent.

11. A process according to claim 10, wherein the water reducing agent is sulphonated melamine-formaldehyde resin, lignosulphonate, $Na_2SO_4$ or naphthalene-formaldehyde resin.

12. Use of quick lime with prolonged hydration time according to claim 1, or made by a process according to any one of claims 2 to 11 as an active constituent of a static demolition agent, which generates an expansive pressure after being mixed with water.